# NEUE EUROPÄISCHE PATENTSCHRIFT

(11) **EP 2 397 781 B2**
(45) Veröffentlichungstag und Bekanntmachung des Hinweises auf die Entscheidung über den Einspruch: **28.12.2016**
(45) Hinweis auf die Patenterteilung: 09.10.2013
(21) Anmeldenummer: 11152376.7
(22) Anmeldetag: 27.01.2011
(51) Int. Cl.: F24D 5/08, F28D 7/10

(54) **Wärmetauscher**
Heat exchanger
Echangeur thermique

(43) Veröffentlichungstag der Anmeldung: 21.12.2011
(73) Patentinhaber: GoGaS Goch GmbH & Co. KG, 44265 Dortmund (DE)
(72) Erfinder: Hiddemann, Herbert, 58730 Fröndenberg (DE)
(74) Vertreter: Zenz Patentanwälte Partnerschaft mbB

(56) Entgegenhaltungen:
- EP-A2- 0 131 962
- CA-A1- 2 544 221
- JP-A- 6 300 470
- US-A- 2 847 193
- US-A- 4 390 125
- US-A1- 2010 300 663

## Beschreibung

Die Erfindung richtet sich auf einen rohrförmig ausgebildeten Wärmetauscher eines Hallenheizungssystems, bei dem ein Wärmeaustausch zwischen einem Abgasstrom und zumindest einem Kühlfluidstrom erfolgt. Ferner richtet sich die Erfindung auf ein Hallenheizsystem mit wenigstens einem Abgase abgebenden und einer Heizvorrichtung zugeordneten Brenner und einem solchen Wärmetauscher. Schließlich richtet sich die Erfindung auf ein Verfahren zum Betrieb eines Hallenbeheizungssystems.

Zur Beheizung von Industriehallen, Werkstätten und Sporthallen werden heutzutage beispielsweise Warmlufterzeuger und Infrarotheizungen eingesetzt, die im Allgemeinen mit gasbetriebenen Brennern ausgestattet sind. Der Vorteil von Infrarotheizungen bzw. Infrarotheizungen gegenüber Warmlufterzeugern liegt darin begründet, dass nicht wie bei herkömmlichen Heizungsvorrichtungen die Luft innerhalb der Halle oder des Raumes erwärmt wird, sondern eine Erwärmung der angestrahlten Oberflächen stattfindet. Dadurch arbeiten Infrarotheizungen vergleichsweise ökonomisch und werden bevorzugt zur Beheizung von Industriehallen, Werkstätten und Sporthallen eingesetzt. Allerdings ergibt sich bei diesen bekannten Infrarotheizungen das Problem, dass die im Abgas enthaltene Energie in Form von Restwärme gar nicht oder nur unzureichend genutzt wird.

Auf dem Gebiet der Hallenbeheizung ist beispielsweise ein Hallenheizungssystem bekannt, das mehrere Infrarotheizungen umfasst. Hierbei sind die Infrarotheizungen als sogenannte Dunkelstrahler ausgebildet, die unterhalb der Hallendecke montiert sind. Jeder Dunkelstrahler weist einen geschlossenen Brenner mit Strahlrohr auf. Durch die erzeugten Heißgase wird die Oberfläche der Strahlrohre erhitzt, die wiederum die Wärme überwiegend als Strahlung in die Halle abgeben. Die Abgase der einzelnen Brenner werden über eine Sammelleitung ins Freie geleitet. Zur Erhöhung des Wirkungsgrades und zur Einhaltung umweltpolitischer Forderungen ist bei diesem System vorgesehen, dass die ins Freie führende Sammelleitung verlängert wird, damit das Abgas innerhalb des verlängerten Leitungsabschnitts vor dem Austritt ins Freie kondensieren kann. Mittels der Verlängerung der Sammelleitung wird mehr Nutzwärme des Abgases freigesetzt als ohne Sammelleitung, wodurch eine Erhöhung des feuerungstechnischen Wirkungsgrades des Gesamtsystems in Bezug auf den unteren Heizwert von ca. 91-93% auf über 100% möglich ist. Nachteilig bei diesem bekannten System ist die unkontrollierte Abgabe der Wärmeenergie, denn durch die gewünschte und erzwungene Kondensation in dem verlängerten Leitungsabschnitt wird lediglich der rechnerische Wirkungsgrad des Systems erhöht, ohne das die Restwärme des Abgases tatsächlich genutzt wird.

Ferner ist auf dem Gebiet der Hallenbeheizung ein Wärmekonzept bekannt, welches die Vorteile wirkungsgradoptimierter Infrarotheizungen in Form von Dunkelstrahlern und einer Abgas-Restwärmenutzung in einem System kombiniert. Dabei entzieht ein Wärmetauscher die im Abgas enthaltene thermische Energie und überträgt sie an das in Rippenrohren vorbeiströmende Wasser. Der Wärmetauscher ist als kompakte Einheit mit einer Sicherheitseinrichtung und mit hochwertiger Wärmedämmung ausgebildet, wobei die Strömungsrichtung des Wärmespeichermediums bzw. Wassers die Strömungsrichtung des Abgasstromes kreuzt. Ein Pufferspeicher nimmt das Heißwasser auf, welches dann über eine einfache Regelung je nach Bedarf in ein gewöhnliches Pumpe-Warmwasser-Heizungsnetz eingespeist wird. Die so zurückgewonnene Energie kann zur warmwasserbasierten Beheizung vielseitig verwendet werden. Auch mit diesen Maßnahmen sind feuerungstechnische Wirkungsgrade von über 100% realisierbar. Nachteilig bei diesem bekannten Stand der Technik ist, dass die Abgasleitung komplett isoliert werden muss, was die Kosten des Systems und den Fertigungsaufwand deutlich erhöht. Da das System und insbesondere der Wärmetauscher mit Wasser als Kühlfluid bzw. als Wärmeträgermedium arbeitet, muss das System vor Frost geschützt werden. Auch muss die Abnahme der Wärme sichergestellt sein. Durch die Kondensationstemperatur des Abgases von ca. 50-55°C muss ferner die Vorlauftemperatur des Wasserkreislaufes der Heizungsanlage bzw. des Pufferspeichers sehr gering gehalten werden. Auch ist dieses Konzept nur bei Sammelanlagen, jedoch nicht bei Einzelstrahlern wirtschaftlich, da die Kosten eines solchen Wärmetauschers sehr hoch sind. Darüber hinaus weist das System im Teillastbetrieb einen stark verminderten Wirkungsgrad auf. Insbesondere wird das Abgas mit überhöhter Temperatur über eine Bypass-Leitung abgeleitet, wenn keine Wärme im System abgenommen werden kann. Auch erfordert dieses bekannte System einen hohen Planungsaufwand.

Ein Wärmetauscher mit den Merkmalen des Oberbegriffs von Anspruch 1 ist beispielsweise aus der US 2010/300 663 A1 bekannt.

Der Erfindung liegt die Aufgabe zugrunde eine Lösung zu schaffen, mit der auf konstruktiv einfache Weise und kostengünstig der Gesamtwirkungsgrad eines Heizungssystems sowohl im Volllast- als auch im Teillastbetrieb verbessert wird.

Diese Aufgabe wird erfindungsgemäß gelöst mit einem Wärmetauscher eines Hallenheizungssystems mit den Merkmalen gemäß dem Patentanspruch 1.

Der erfindungsgemäße Wärmetauscher eines Hallenheizungssystems ist rohrförmig ausgebildet und umfasst ein Kernrohr, ein das Kernrohr umfangsmäßig umgebendes Abgasrohr und ein das Abgasrohr umfangsmäßig umgebendes Außenrohr. Ein erstes Längsende des Wärmetauschers weist eine Zuführung für einen Gesamtkühlfluidstrom auf, wobei ein zweites Längsende des Wärmetauschers mit einer zumindest einen Teil des Gesamtkühlfluidstroms abführenden Abführleitung verbunden ist. Ein im Bereich des ersten Längsendes des Wärmetauschers angeordneter Strömungsteiler teilt den Gesamtkühlfluidstrom in einen ersten Kühlfluidstrom und in einen zweiten Kühlfluidstrom. Das Kernrohr erstreckt sich zwischen dem ersten Längsende und dem zweiten Längsende des Wärmetauschers und steht mit dem Strömungsteiler, der das Kernrohr mit dem ersten Kühlfluidstrom versorgt, in Strömungsverbindung. Ferner ist zwischen dem Abgasrohr und dem Kernrohr ein Abgasringspalt gebildet, durch den ein im Bereich des zweiten Längsendes des Wärmetauschers zugeführter und im Bereich des ersten Längsendes des Wärmetauschers abgeführter Abgasstrom strömt. Ein zwischen dem Außenrohr und dem Abgasrohr gebildeter Ringspalt steht mit dem Strömungsteiler, der den Ringspalt mit dem zweiten Kühlfluidstrom versorgt, in Strömungsverbindung. Der Wärmeaustausch vom Abgasstrom auf die beiden Kühlfluidströme erfolgt in entgegengesetzte Radialrichtungen. Der Wärmetauscher ist dadurch gekennzeichnet, dass das zweite Längsende des Wärmetauschers mit einer zumindest einen Teil des Gesamtkühlfluidstroms abführenden Abführleitung verbunden ist und dass die von dem ersten Kühlfluidstrom durchströmte Querschnittsfläche des Kernrohres größer ist als die von dem Abgasstrom durchströmte Querschnittsfläche des zwischen dem Kernrohr und dem Abgasrohr gebildeten Abgasringspalts.

Ebenso wird die vorstehend genannte Aufgabe erfindungsgemäß gelöst mit einem Hallenheizungssystem mit den Merkmalen gemäß dem Patentanspruch 6.

Das erfindungsgemäße Hallenheizungssystem weist wenigstens einen Abgase abgebenden und einer Heizvorrichtung zugeordneten Brenner auf, der in einem zu heizenden Hallenraum angeordnet ist und an den sich mindestens eine die Abgase abführende Abgasleitung anschließt, die innerhalb des zu heizenden Hallenraumes angeordnet ist und die zu einer ins Freie mündenden Abgasanlage führt. Innerhalb des zu heizenden Hallenraumes ist wenigstens ein Wärmetauscher nach einem der Ansprüche 1 bis 5 angeordnet, der stromab der Abgasleitung und stromauf der Abgasanlage angeordnet ist, wobei das Abgasrohr des Wärmetauschers mit der Abgasleitung und der Abgasanlage in Strömungsverbindung steht. Eine dem Wärmetauscher zugeordnete Fördervorrichtung fördert den Gesamtkühlfluidstrom zu dem ersten Längsende des Wärmetauschers, wobei das zweite Längsende des Wärmetauschers mit zumindest einem, wenigstens einen Teil des im Wärmetauscher erwärmten Gesamtkühlfluidstroms nutzenden Verbraucher verbunden ist. Der Wärmeaustausch im Wärmetauscher vom Abgasstrom auf die beiden Kühlfluidströme erfolgt in entgegengesetzte Radialrichtungen.

Bei Verwendung von mehreren Wärmetauschern können diese im Abgassystem parallel und/oder in Reihe angeordnet sein.

Schließlich wird die vorstehend genannte Aufgabe auch durch ein Verfahren zum Betrieb eines Hallenheizungssystems mit den Merkmalen gemäß dem Patentanspruch 10 gelöst.

Bei dem erfindungsgemäßen Verfahren zum Betrieb eines Hallenheizungssystems wird von zumindest einem einer Heizungsvorrichtung zugeordneten Brenner ein Abgasstrom erzeugt, der durch eine Abgasleitung über ein zumindest einem Wärmetauscher nach einem der Ansprüche 1 bis 5 zugeordnetes Abgasrohr zu einer ins Freie führenden Abgasanlage geleitet wird, wobei der Abgasstrom in dem zumindest einen Wärmetauscher durch den Abgasringspalt, der zwischen dem Abgasrohr und dem sich im Inneren des Abgasrohres erstreckenden Kernrohr gebildet wird, hindurch gefördert wird. Innerhalb des zumindest einen Wärmetauschers wird eine radial doppelseitige Wärmeübertragung bzw. in entgegengesetzte Radialrichtungen wirkende bzw. erfolgende Wärmeübertragung der im Abgasstrom enthaltenen Wärme durchgeführt, bei der die Wärme des Abgasstromes sowohl auf den ersten, im Kernrohr geförderten Kühlfluidstrom als auch auf den zweiten Kühlfluidstrom übertragen wird, der durch den Ringspalt, der zwischen dem das Abgasrohr umfangsmäßig umgebenen Außenrohr und dem Abgasrohr gebildet wird, hindurch gefördert wird.

Vorteilhafte und zweckmäßige Ausgestaltungen und Weiterbildungen der Erfindung ergeben sich aus den entsprechenden Unteransprüchen.

Durch die Erfindung wird eine Möglichkeit bereitgestellt, mit welcher auf konstruktiv einfache Weise und kostengünstig der Gesamtwirkungsgrad eines Heizungssystems, insbesondere eines Hallenheizungssystems, sowohl für den Volllast- als auch für den Teillastbetrieb verbessert und erhöht wird. Bei dem erfindungsgemäßen Wärmetauscher erfolgt die Abkühlung des Abgases bis zur Kondensation, wobei das zur Wärmeübertragung verwendete Kühlfluid der beiden Kühlfluidströme Luft ist, die beim Wärmeaustausch vorzugsweise auf 30-38°C erwärmt wird und mittels eines Ventilators einem Hallen- oder Büroraum als Warmluft zugeführt werden kann. Alternativ kann ein Teil der vorgewärmten Luft, d.h. entweder der erste oder der zweite Kühlfluidstrom, oder die gesamte, vorgewärmte Luft zur Anhebung der Verbrennungslufttemperatur genutzt und einem Brenner zugeführt werden. Der gesamte Wärmetauscher kann aus Aluminium bestehen, wobei die einzelnen Rohre eine Wandstärke von 1,5 mm aufweisen können. Die strömungsgünstige, glatte und mit geringsten Widerständen behaftete Konstruktion des Wärmetauschers benötigt nur geringste Zusatzenergie zur Erreichung der Kondensation. Daher sind Wirkungsgrade bis zu 108% möglich. Erfindungsgemäß sind jegliche Hallenheizungssysteme mit einem erfindungsgemäßen Wärmetauscher nachrüstbar, wobei der Wärmetauscher auch in Verbindung mit mehreren Brennern betrieben werden kann. Ferner ist gemäß der Erfindung der Wärmetauscher für einen Betrieb mit Unterdruck- und Überdruckabgassystemen geeignet. Entsprechend der Erfindung ist der Wärmetauscher derart dimensioniert, dass die Temperatur des Abgases innerhalb des Wärmetauschers bis in den Kondensationsbereich abgesenkt wird. Anders ausgedrückt besitzt der Wärmetauscher eine solche Größe bzw. eine solche thermisch wirksame Fläche, dass die Temperatur des Abgases innerhalb des Wärmetauschers und bis zum Abgaskanal auf einen Wert abgesenkt wird, bei welchem das Abgas im Wärmetauscher kondensiert. Der Wärmetauscher ist daher mittels entsprechender Dimensionierung an verschiedenste Bedingungen für unterschiedlichste Heizungsanlagen anpassbar. Der zweite Kühlfluidstrom dient als eine Art Wärmeisolierung und verhindert durch eigene Wärmeaufnahme, dass die im Abgas enthaltene Wärme ungenutzt an die Umgebung abgeben wird. Daher ist eine Isolierung für den Wärmetauscher entbehrlich. Zusätzlich zu der an der äußeren Umfangswand (entspricht dem Abgasrohr) des Abgasringspalts stattfindenden Wärmeübertragung auf den zweiten Kühlfluidstrom erfolgt eine Wärmeübertragung an der inneren Umfangswand (entspricht dem Kernrohr) des Abgasringspalts auf den ersten Kühlfluidstrom, so dass insgesamt eine doppelseitige bzw. eine in entgegengesetzte Radialrichtungen (radial nach innen gerichtet auf den ersten Kühlfluidstrom und radial nach außen gerichtet auf den zweiten Fluidstrom) wirkende Wärmeübertragung vom Abgasstrom auf die Kühlfluidströme vorliegt.

Bei dem erfindungsgemäßen Wärmetauscher wird das in Form von Luft verwendete Kühlfluid zum Wärmeaustausch mit dem Abgasstrom in einen ersten und einen zweiten Kühlfluidstrom geteilt, die den zwischen dem Kühlrohr und dem Abgasrohr gebildeten Abgasringspalt umgeben und überströmen. Bei der hierbei von beiden Teilkühlfluidströmen aufgenommenen Wärmeenergie ist es gemäß einer Ausgestaltung des Wärmetauschers von Vorteil, wenn im Bereich des zweiten Längsendes des Wärmetauschers ein Strömungssammler angeordnet ist, der den ersten und zweiten Kühlfluidstrom zusammenführt und als Gesamtkühlfluidstrom oder Teilkühlfluidstrom zur Abführleitung leitet. Auf diese Weise kann der im Kernrohr erwärmte, erste Kühlfluidstrom entweder mit dem im Ringspalt zwischen Außenrohr und Abgasrohr erwärmten, zweiten Kühlfluidstrom mittels des Strömungssammlers zusammengeführt werden oder aber als erwärmter Teilkühlfluidstrom beispielsweise zur Erwärmung eines Raumes genutzt werden, wobei auch denkbar ist, diesen Teilkühlfluidstrom als vorerwärmte Verbrennungsluft zur Anhebung der Verbrennungslufttemperatur zu verwenden. Zu diesem Zweck kann in weiterer Ausgestaltung des Wärmetauschers das zweite Längsendes des Wärmetauschers mit einer Teilabführleitung zur getrennten Abführung des ersten oder des zweiten Kühlfluidstroms verbunden sein.

Erfindungsgemäß ist bei dem Wärmetauscher vorgesehen, dass die von dem ersten Kühlfluidstrom durchströmte Querschnittsfläche des Kernrohres größer ist als die von dem Abgasstrom durchströmte Querschnittsfläche des zwischen dem Kernrohr und dem Abgasrohr gebildeten Abgasringspalts. Diese Ausgestaltung und Dimensionierung von Kühlrohr, Abgasrohr und Kernkühlrohr hat sich hinsichtlich eines besonders effektiven Wärmeaustauschs als vorteilhaft erwiesen.

Damit der durch das Kernrohr hindurch strömende erste Kühlfluidstrom möglichst viel von der im Abgasstrom enthaltenen Wärme aufnimmt, ist bei dem erfindungsgemäßen Wärmetauscher in Ausgestaltung vorgesehen, dass das Kernrohr eine größere Längserstreckung aufweist als das Abgasrohr.

Um ferner die Strömungsverluste von Abgas und Kühlfluid bei Durchströmung der einzelnen Rohre des Wärmetauschers minimal zu halten, ist in Ausgestaltung des erfindungsgemäßen Wärmetauschers vorgesehen, dass das Außenrohr, das Abgasrohr und das Kernrohr einen kreisförmigen Querschnitt aufweisen und im Wesentlichen konzentrisch zueinander angeordnet sind.

Zur Übertragung von möglichst viel Wärme des Abgases auf das Kühlfluid ist in weiterer Ausgestaltung des erfindungsgemäßen Wärmetauschers vorgesehen, dass innerhalb des Wärmetauschers der erste und der zweite Kühlfluidstrom entgegen der Strömungsrichtung des Abgasstromes strömen. Demnach erfolgt die Wärmeübertragung nach dem Gegenstromprinzip, wobei alternativ auch eine Übertragung der Wärme nach dem Gleichstromprinzip möglich ist, d.h. die Strömungsrichtung von Abgasstrom und Kühlfluidströmen durch den Wärmetauscher könnte auch identisch sein.

In weiterer Ausgestaltung des Wärmetauschers sieht die Erfindung vor, dass das Abgasrohr mit seinem ersten Ende in Nähe des zweiten Längsendes des Wärmetauschers und mit seinem zweiten Ende in Nähe des Strömungsteilers radial nach außen über den Außenumfang des Außenrohres geführt ist. Da das Kernrohr zumindest die gleiche Axiallänge wie das Abgasrohr aufweist, ist sichergestellt, dass innerhalb des gesamten Wärmetauschers die Wärmeübertragung bis zu den aus dem Wärmetauscher geführten Enden des Abgasrohres erfolgt.

Bei dem Wärmetauscher und dem Verfahren gemäß der vorliegenden Erfindung ist ferner vorgesehen, dass die Temperatur des Abgasstromes nach Verlassen des Wärmetauschers höchstens 70°C beträgt bzw. dass die Temperatur des Abgasstromes innerhalb des Wärmetauschers bis zum austrittsseitigen Ende des Abgasrohres auf mindestens 70°C abgekühlt oder bis in seinen Kondensationsbereich abgesenkt wird. Bei einem derart abgekühlten Abgasstrom ist die Verwendung einer kostengünstigen Abgasanlage aus Kunststoff möglich.

Damit die Kühlfluidströme, welche vorzugsweise aus Luft gebildet sind, auch zur Beheizung von Hallen oder Büroräumen oder sogar zur Anhebung der Verbrennungslufttemperatur vorteilhaft genutzt werden können, ist in Ausgestaltung des erfindungsgemäßen Wärmetauschers und Verfahrens vorgesehen, dass die Temperatur des ersten und/oder des zweiten Kühlfluidstromes nach Verlassen des (zumindest einen) Wärmetauschers mindestens 30°C beträgt bzw. dass der erste Kühlfluidstrom und/oder der zweite Kühlfluidstrom innerhalb des (zumindest einen) Wärmetauschers auf wenigstens 30°C erwärmt werden/wird.

Dementsprechend sieht die Erfindung in Ausgestaltung des Verfahrens vor, dass der erste, im Kernrohr strömende und erwärmte Kühlfluidstrom und/oder der zweite, im Ringspalt zwischen dem Außenrohr und dem Abgasrohr strömende und erwärmte Kühlfluidstrom dem wenigstens einen Brenner als vorerwärmte Verbrennungsluft zugeführt werden/wird. Alternativ oder zusätzlich ist in Ausgestaltung des erfindungsgemäßen Verfahrens vorgesehen, dass der erste, im Kernrohr strömende und erwärmte Kühlfluidstrom und/oder der zweite, im Ringspalt zwischen dem Außenrohr und dem Abgasrohr strömende und erwärmte Kühlfluidstrom zur Beheizung eines Raumes oder für einen Torschleier verwendet werden/wird.

Um die Effektivität der Wärmeübertragung aus dem Abgas auf das Kühlfluid zu erhöhen, ist bei dem erfindungsgemäßen Hallenheizungssystem vorgesehen, dass sich das Kernrohr im Inneren des Abgasrohres erstreckt, wobei zwischen dem ersten und dem zweiten Längsende des Abgasrohres zwischen dem Kernrohr und dem Abgasrohr ein das Abgas führender Abgasringspalt gebildet ist, und wobei ein erstes Längsende des Kernrohres mit der das Kühlfluid bereitstellenden Versorgungsvorrichtung oder mit dem ersten Längsende des Kernrohres über einen Strömungsteiler in Strömungsverbindung steht. Hierbei kann mittels des Strömungsteilers ein einzelner, von der Versorgungsvorrichtung bereitgestellter Gesamtkühlfluidstrom verwendet werden, so dass eine zusätzliche Vorrichtung zur Bereitstellung von Kühlfluid entbehrlich ist.

Bei dem erfindungsgemäßen Hallenheizungssystem wird vorzugsweise eine Infrarotheizung in Form eines Dunkelstrahlers verwendet, wobei ein mit Gas betriebener Brenner mit Strahlrohr ein Teil des Dunkelstrahlers bzw. der Infrarotheizung ist. Als Alternative hierzu kann entsprechend einer weiteren Ausgestaltung des Hallenheizungssystems der wenigstens eine Brenner Teil eines Hellstrahlers, eines Warmlufterzeugers oder eines Vakuum- oder Mehrbrennersystems sein.

Ferner ist in weiterer Ausgestaltung des erfindungsgemäßen Hallenheizungssystems vorgesehen, dass stromab des wenigstens einen Wärmetauschers und stromauf der Abgasanlage eine Abführvorrichtung zur Abfuhr des sich in dem Abgasrohr gebildeten Kondensats vorgesehen ist. Auf diese Weise ist sichergestellt, dass Kondensat aus dem System abgeführt werden kann und nicht die Wärmeübertragung nachteilig beeinflusst. Dabei kann die Abführeinrichtung optional wenigstens eine Neutralisationsbox aufweisen, so dass das Kondensat in die Kanalisation abgeleitet werden kann.

Bei dem erfindungsgemäßen Hallenheizungssystems und dem erfindungsgemäßen Verfahren können mehrere Wärmetauscher vorgesehen sein und verwendet werden, die mit einem oder mit mehreren Abgasleitungen verbunden sind. Dabei können die Wärmetauscher entweder parallel zueinander oder in Reihe oder sogar parallel zueinander und in Reihe angeordnet sein. Dadurch können unterschiedliche groß dimensionierte Wärmetauscher verwendet werden, um verschiedensten Anforderungen hinsichtlich eines effizienten Abgaswärmetausches gerecht zu werden.

Schließlich sieht die Erfindung in weiterer Ausgestaltung des Hallenheizungssystems vor, dass sich an dem zweiten Längsende des Wärmetauschers eine Wärmeübertragungsvorrichtung anschließt. Diese zusätzliche Wärmeübertragungsvorrichtung kann speziellen Randbedingungen angepasst sein, die von denen des erfindungsgemäßen Wärmetauschers abweichen, weshalb dieser zwar für einen Wärmeaustausch mit dem Abgas, nicht aber für eine Wärmeübertragung auf einen Verbraucher geeignet ist.

Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte Ausführungsbeispiele der Erfindung dargestellt sind. In der Zeichnung zeigt:
Figur 1 einen erfindungsgemäßen Wärmetauscher entsprechend einer ersten Ausführungsform im Längsschnitt,
Figur 2 ein erfindungsgemäßes Hallenheizungssystem mit Dunkelstrahler und dem Wärmetauscher aus Figur 1,
Figur 3 alternative Ausgestaltungen des Hallenheizungssystems,
Figur 4 einen Wärmetauscher gemäß einer zweiten Ausführungsform und
Figur 5 eine Detailansicht des in Figur 4 gezeigten Wärmetauschers.

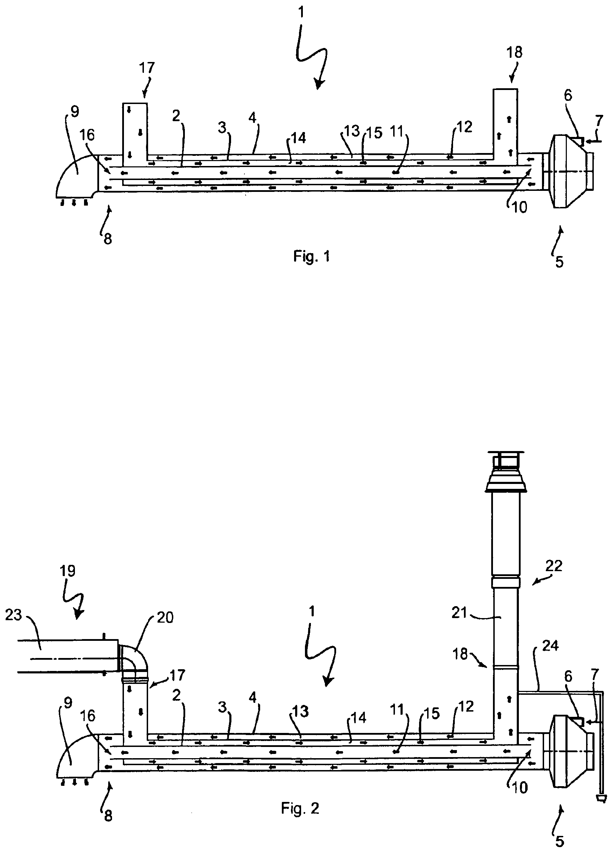

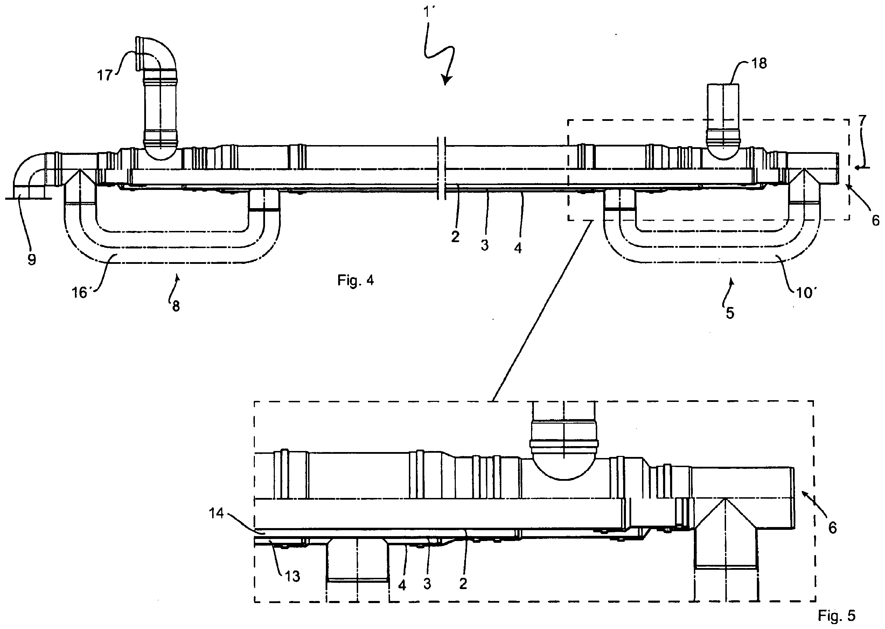

In den Figuren 1 bis 3 ist ein erfindungsgemäßer Wärmetauscher 1 gemäß einer ersten Ausführungsform dargestellt, wohingegen die Figuren 4 und 5 einen Wärmetauscher 1' gemäß einer zweiten Ausführungsform zeigen.

Der in schematischen Schnittansichten in den Figuren 1 bis 3 dargestellte Wärmetauscher 1 gemäß der ersten Ausführungsform ist länglich und rohrförmig ausgebildet und umfasst ein längliches Kernrohr 2, welches im Wesentlichen von einem Abgasrohr 3 umfangsmäßig umgeben ist. Ferner umfasst der Wärmetauscher 1 ein längliches Außenrohr 4, welches den äußeren Umfang des Abgasrohres 3 im Wesentlichen umgibt. Das Kernrohr 2, das Abgasrohr 3 und das Außenrohr 4 weisen einen kreisförmigen Querschnitt auf und sind konzentrisch zueinander angeordnet. Neben der Kreisform ist es auch denkbar, dass die einzelnen Rohre einen mehreckigen oder ovalen Querschnitt aufweisen können.

An einem ersten Längsende 5 des Wärmetauschers 1 ist eine Zuführöffnung 6 vorgesehen, durch die hindurch der Wärmetauscher 1 mit einem Gesamtkühlfluidstrom 7 versorgt wird. Bei dem Fluid des Gesamtkühlfluidstroms 7 handelt es sich um aus der Umgebung stammende Luft. Das zweite Längsende 8 des Wärmetauschers 1 ist mit einer Abführleitung 9 verbunden, von der zumindest ein Teil des in den Wärmetauscher 1 geförderten Gesamtkühlfluidstroms 7 abgeführt werden kann.

Im Bereich des ersten Längsendes 5 des Wärmetauschers 1 ist die Rohröffnung des Kernrohres 2 angeordnet, die in dem ersten Ausführungsbeispiel als ein Strömungsteiler 10 fungiert. Mit Hilfe des Strömungsteilers 10 wird der Gesamtkühlfluidstrom 7 in einen ersten Kühlfluidstrom 11 und in einen zweiten Kühlfluidstrom 12 geteilt. Der Strömungsteiler 10 steht mit dem sich zwischen dem ersten und zweiten Längsende 5 und 8 des Wärmetauschers 1 erstreckenden Kernrohr 2 in Strömungsverbindung und versorgt das Kernrohr 2 mit dem ersten Kühlfluidstrom 11. Ferner steht der Strömungsteiler mit einem zwischen dem Abgasrohr 3 und dem Außenrohr 4 gebildeten Ringspalt 13 in Strömungsverbindung und versorgt diesen mit dem zweiten Kühlfluidstrom 12. Zwischen dem Abgasrohr 3 und dem Kernrohr 2 ist ein Abgasringspalt 14 ausgebildet. Dem Abgasringspalt 14 wird im Bereich des zweiten Längsendes 8 des Wärmetauschers 1 ein Abgasstrom 15 zugeführt, der durch den Abgasringspalt 14 in Richtung des ersten Längsendes 5 des Wärmetauschers 1 strömt und im Bereich des ersten Längsendes 5 aus und von dem Wärmetauscher 1 weg- und abgeführt wird.

Der Wärmeaustausch zwischen dem Abgasstrom 15 und dem ersten und zweiten Kühlfluidstrom 11 und 12 erfolgt nach dem Gegenstromprinzip, d.h. dass der erste und der zweite Kühlfluidstrom 11 und 12 entgegen der Strömungsrichtung des Abgasstromes 15 innerhalb des Wärmetauschers 1 gefördert werden und strömen. Die Wärmeübertragung erfolgt demnach in Längsrichtung bzw. Axialrichtung des Wärmetauschers 1 betrachtet nach dem Gegenstromprinzip, wobei bei baulich bedingten Einschränkungen der Wärmetauscher 1 alternativ nach dem Gleichstromprinzip betrieben werden könnte. Dabei erfolgt der Wärmeaustausch an einer Axialposition des Wärmetauschers 1 radial doppelseitig an den Wänden des Abgasrohres 4 und des Kernrohres 2. bzw. die Wärmübertragung von dem Abgasstrom 15 auf die Kühlfluidström1 11, 12 erfolgt in zwei entgegengesetzte Radialrichtungen, und zwar in eine nach innen gerichtete Richtung auf den ersten Kühlfluidstrom 11 sowie in eine nach außen gerichtete Richtung auf den zweiten Kühlfluidstrom 12.

Zwischen dem ersten Längsende 5 und dem zweiten Längsende 8 des Wärmetauschers 1 erfolgt der vorstehend beschriebene Wärmeaustausch, wobei sich zweckmäßigerweise das Kernrohr 2 zwischen dem ersten Längsende 5 und dem zweiten Längsende 8 des Wärmetauschers 1 erstreckt. Im Bereich des zweiten Längsendes 8 des Wärmetauschers 1 endet das Kernrohr 2, dessen austrittsseitige Öffnung als ein Strömungssammler 16 fungiert. Der Strömungssammler 16 führt dabei den ersten und zweiten Kühlfluidstrom 11 und 12 wieder zu dem Gesamtkühlfluidstrom 7 zusammen, der nun durch den Wärmeaustausch eine höhere Temperatur aufweist, als an dem ersten Längsende 5 des Wärmetauschers 1. Die Länge und der Querschnitt der einzelnen Rohre des Wärmetauschers 1 sind so bemessen, dass die Temperatur der am zweiten Längsende 8 des Wärmetauschers 1 zusammengeführten Kühlfluidströme 11, 12 mindestens 30°C beträgt, wohingegen die Temperatur des Abgasstromes 15 nach Verlassen des Wärmetauschers 1 höchstens 70°C beträgt. Bedingung hierfür ist, dass die von dem ersten Kühlfluidstrom 11 durchströmte Querschnittsfläche des Kernrohres 2 größer ausgebildet ist als die von dem Abgasstrom 15 durchströmte Querschnittsfläche des zwischen dem Kernrohr 2 und dem Abgasrohr 3 gebildeten Abgasringspalts 14 und/oder als die von dem zweiten Kühlfluidstrom 12 durchströmte Querschnittsfläche des zwischen dem Außenrohr 4 und dem Abgasrohr 3 gebildeten Ringspalts 13. Nicht zwingend, aber zweckmäßig, sollte dabei das Kernrohr 2 eine größere Längserstreckung als das Abgasrohr 3 aufweisen.

Alternativ oder optional kann der Strömungssammler 16 weggelassen werden, so dass die beiden erwärmten Kühlfluidströme 11, 12 nicht zusammengeführt, sondern voneinander getrennt als Teilkühlfluidströme aus dem Wärmetauscher 1 geleitet und entsprechend unterschiedlichen Verbrauchern zugeführt werden. Zu diesem Zweck kann der Wärmetauscher 1 mit einer nicht näher dargestellten Teilabführleitung zur getrennten Abführung des ersten und des zweiten Kühlfluidstroms 11, 12 verbunden sein.

Bei dem in den Figuren 1 bis 3 dargestellten Wärmetauscher 1 entsprechend einer ersten Ausführungsform bildet das Außenrohr 4 quasi eine Art Hülle, unter welcher das Abgasrohr 3 und das Kernrohr 2 angeordnet sind. Ein erstes Ende 17 und ein zweites Ende 18 des Abgasrohres 3 sind dabei radial außerhalb des Außenrohres 4 angeordnet. Der Hauptteil des Abgasrohres 3 verläuft parallel zu dem Kernrohr 2 innerhalb des Außenrohres 4. Lediglich in den Endbereichen des Abgasrohres 3 im Bereich des zweiten Längsendes 8 des Wärmetauschers 1 ist das erste Ende 17 durch die Wandung des Außenrohres 4 nach außen über den Außenumfang des Außenrohres 4 geführt. Ebenso verhält es sich mit dem zweiten Ende 18 des Abgasrohres 3, das im Bereich des ersten Längsendes 5 des Wärmetauschers 1 aus dem Außenrohr 4 herausgeführt ist. Wie ferner den Figuren 1 bis 3 zu entnehmen ist, durchdringt das Kernrohr 2 in den Bereichen des ersten und zweiten Längsendes 5 und 8 das Abgasrohr 3, welches in diesen Bereichen abgewinkelt radial nach außen verlaufend aus dem Außenrohr 4 herausgeführt ist. Das Abgasrohr 3 weist somit eine U-förmige Gestalt auf, wobei die beiden Schenkel des U im Wesentlichen quer zur Längserstreckung des Kernrohres 2 verlaufen und der die beiden Schenkel verbindende Rohrabschnitt des Abgasrohres 3 das Kernrohr 2 umgibt.

Der in den Figuren 1 bis 3 gezeigte Wärmetauscher 1 kann bei einem Hallenheizungssystem verwendet werden, wobei er universell bei sämtlichen befeuerten Heizanlagen zur Nutzung der im Abgas enthaltenen Energie verwendet werden kann. Bei einer Verwendung bei einem Hallenheizungssystem umfasst das Hallenheizungssystem wenigstens einen Brenner, der einer Heizvorrichtung 19 zugeordnet ist und der Abgase abgibt, die als Abgasstrom 15 über eine Abgasleitung 20 von dem Brenner bzw. der Heizvorrichtung 19 weg zu dem vorstehend beschriebenen Wärmetauscher 1 geleitet werden, wobei die Abgasleitung 20 mit dem ersten Ende 17 des Abgasrohres 3 in Strömungsverbindung steht. Der an dem zweiten Ende 18 des Abgasrohres 3 austretende Abgasstrom 15 wird dann über eine weitere Leitung 21 einer Abgasanlage 22 zugeführt, von der aus der abgekühlte Abgasstrom 15 ins Freie geleitet wird. Der Wärmetauscher 1 ist- folgt man den Strömungsweg des Abgasstromes 15 - stromab der Abgasleitung 20 und stromauf der Abgasanlage 22 angeordnet, wobei das Abgasrohr 3 des Wärmetauschers 1 mit der Abgasleitung 20 und der Abgasanlage 22 in Strömungsverbindung steht. Hierbei sind der Brenner bzw. die Heizvorrichtung 19, die Abgasleitung 20 und der Wärmetauscher 1 gemeinsam in einem zu heizenden Hallenraum angeordnet.

Die Figur 2 zeigt den erfindungsgemäßen Wärmetauscher 1, der in Kombination mit der als Infrarotheizung ausgebildeten Heizvorrichtung 19 in Form eines Dunkelstrahlers 23 verwendet wird. Bei diesem Dunkelstrahler 23 erzeugt ein nicht näher dargestellter Brenner Heißgase, welche die Oberfläche eines Strahlrohres erhitzen. Dabei gibt das Strahlrohr die Wärme überwiegend als Strahlung senkrecht nach unten ab und wird zur Beheizung eingesetzt. Der vom Dunkelstrahler 23 über die Abgasleitung 20 zu dem ersten Ende 17 des Abgasrohres 3 geförderte Abgasstrom 15 wird innerhalb des Wärmetauschers 1 bis zu dem zweiten Ende 18 des Abgasrohres 3 auf mindestens 70°C oder bis in den Kondensationsbereich abgekühlt. Das Kondensat kann dann im Bereich des zweiten Endes 18 des Abgasrohres 3 mittels einer Abführvorrichtung 24, die stromauf der Abgasanlage 22 angeordnet ist, abgeführt werden, wobei die Abführvorrichtung 24 ferner zumindest eine Neutralisationsbox umfassen kann, so dass eine Ableitung des Kondensats ins Abwasser möglich ist.

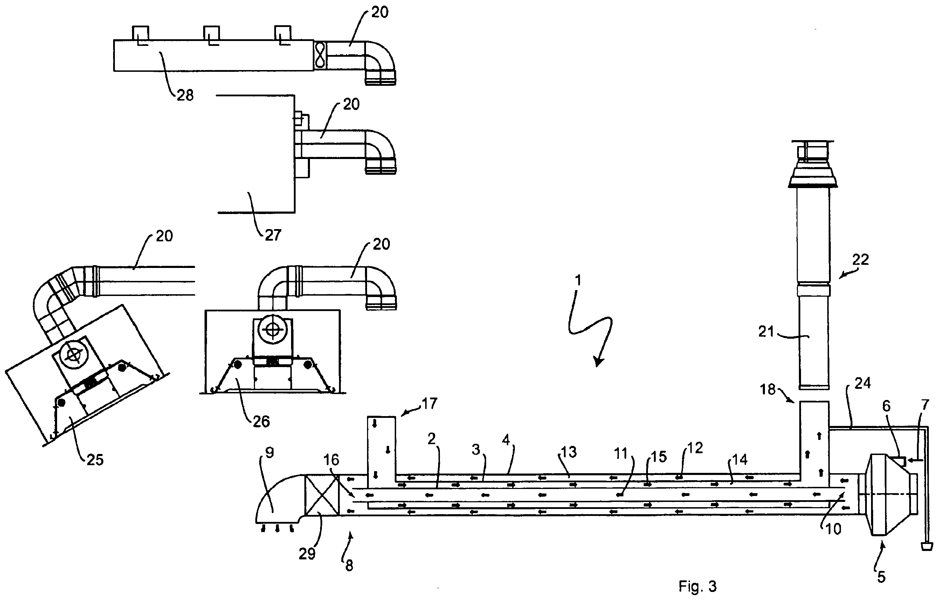

In Figur 3 sind weitere vorstellbare Kombinationen des erfindungsgemäßen Wärmetauschers 1 mit unterschiedlichen Heizvorrichtungen dargestellt. Der zur Hallenbeheizung eingesetzte Wärmetauscher 1 wird auch hierbei in einem Hallenheizungssystem eingesetzt, das wenigstens einen Brenner einer Heizvorrichtung aufweist, dessen Abgase gesammelt und über die Abgasleitung 20 zu dem Wärmetauscher 1 geleitet werden. Dabei ist der Brenner in einem zu heizenden Hallenraum angeordnet, wobei die Abgasleitung 9 und der stromab des Brenners angeordnete Wärmetauscher 1 ebenfalls innerhalb des zu heizenden Hallenraumes angeordnet sind. Beispielsweise kann die Abgasleitung 20 Abluft eines Brenners eines schräg angeordneten Hellstrahlers 25 oder eines senkrecht angeordneten Hellstrahlers 26 fördern, so dass der erfindungsgemäße Wärmetauscher 1 auch in Kombination mit Hellstrahlern, die der Gruppe von Infrarotheizungen angehören, einsetzbar ist. Ferner kann die Abluft eines Brenners eines Warmlufterzeugers 27, die über die Abgasleitung 20 zu dem ersten Ende 17 des Abgasrohres 3 gefördert wird, für eine Wärmeübertragung im Wärmetauscher 1 verwendet werden. Denkbar ist aber auch eine Verwendung des Wärmetausches 1 in Verbindung mit einem Vakuum- oder Mehrbrenner-System 28, wobei die heißen Abgase auch hier über die Abgasleitung 20 zu dem ersten Ende 17 des Abgasrohres 3 gelangen und im Wärmetauscher 1 wirkungsgradsteigernd genutzt werden. Die beiden Kühlfluidströme 11 und 12 werden bei jeder dieser Anwendungen innerhalb des Wärmetauschers 1 auf wenigstens 30°C erwärmt. Dabei versorgt eine nicht dargestellte Fördervorrichtung den Wärmetauscher 1 an seinem ersten Längsende 5 mit dem Gesamtkühlfluidstrom 7. Zur Anhebung der Temperatur der Verbrennungsluft kann entweder der erste, durch das Kernrohr 2 strömende Kühlfluidstrom 11 oder der zweite, durch den Ringspalt 13 strömende Kühlfluidstrom 12 oder aber beide Kühlfluidströme 11, 12 gemeinsam zu einem Brenner der vorstehend genannten Art geführt und als vorerwärmte Verbrennungsluft verwendet werden. Alternativ zu diesen Möglichkeiten oder parallel dazu kann einer der beiden Kühlfluidströme 11 oder 12 oder beide zur Beheizung eines Raumes oder für einen Torschleier verwendet werden. Optional können - wie in Figur 3 dargestellt - die am zweiten Ende 8 des Wärmetauschers 1 mittels des Strömungssammlers 16 zusammengeführten Kühlfluidströme 11 und 12 durch einen weiteren Wärmetauscher 29 zur Nutzung der in den Kühlfluidströmen 11, 12 vorhandenen Wärme geleitet werden. Die in den Kühlfluidströmen 11, 12 vorhandene Wärmeenergie kann anschließend über die Abführleitung 9 einem anderen Verbraucher, der nicht zwingend in dem gleichen Gebäude wie der Wärmetauscher 1 angeordnet sein muss, zur Verfügung gestellt werden.

In Figur 4 ist eine zweite Ausführungsform eines Wärmetauschers 1' dargestellt, wobei Figur 5 einen vergrößerten Ausschnitt des ersten Längsendes 5 des Wärmetauschers 1' zeigt. Bei der dargestellten Ausführungsform wird dem Kernrohr 2 an seiner im Bereich des ersten Längsendes 5 angeordneten Rohröffnung der Gesamtkühlfluidstrom 7 zugeführt. Ein überwiegender Anteil des Gesamtkühlfluidstromes 7 strömt als erster Kühlfluidstrom 11 durch das Kernrohr 2 hindurch und zu dem zweiten Längsende 8 des Wärmetauschers 1' hin. Ein Anteil des Gesamtkühlfluidstromes 7 wird im Endbereich des Kernrohres 2 über einen U-Rohr-förmigen Strömungsteiler 10' zu dem Außenrohr 4 geleitet, welches konzentrisch zu dem Abgasrohr 3 und dem Kernrohr 2 angeordnet ist, welches aber eine im Vergleich zu der in den Figuren 1 bis 3 dargestellten Ausführungsform eine geringere Längserstreckung als das Kernrohr 2 aufweist. Das Außenrohr 4 ist an dem Abgasrohr 3 befestigt und dort endseitig abgedichtet, wobei über den U-Rohr-förmigen Strömungsteiler 10' der zweite Kühlfluidstrom 12 in den Ringspalt 13 zwischen dem Außenrohr 4 und dem Abgasrohr 3 gelangt. Der zweite Kühlfluidstrom 12 wird innerhalb des Ringspalts 13 bis zu einem U-Rohr-förmigen und am zweiten Längsende 8 des Wärmetauschers 1' angeordneten Strömungssammler 16'geleitet, über den der zweite Kühlfluidstrom 12 dem ersten Kühlfluidstrom 12 am zweiten Längsende 8 des Wärmetauschers 1' zugeführt wird. An dem zweiten Längsende 8 des Wärmetauschers 1' schließt sich dann die Abführleitung 9 an, die - wie vorstehend für die erste Ausführungsform beschrieben - mit einem oder mehreren Verbrauchern in Strömungsverbindung stehen kann. Die erste und zweite Ausführungsform des Wärmetauschers 1, 1' weisen große Übereinstimmungen auf, so dass hinsichtlich einer detaillierten Beschreibung auf die vorstehenden Ausführungen verwiesen sei. Als bedeutsame Gemeinsamkeit sei erwähnt, dass die von dem ersten Kühlfluidstrom 11 durchströmte Querschnittsfläche des Kernrohres 2 größer ist als die von dem Abgasstrom 15 durchströmte Querschnittsfläche des zwischen dem Kernrohr 2 und dem Abgasrohr 3 gebildeten Abgasringspalts 14. Ebenso ist bei beiden Ausführungsformen des Wärmetauschers 1, 1' die von dem ersten Kühlfluidstrom 11 durchströmte Querschnittsfläche des Kernrohres 2 größer als die von dem zweiten Kühlfluidstrom 12 durchströmte Querschnittsfläche des zwischen dem Außenrohr 4 und dem Abgasrohr 3 gebildeten Ringspalts 13. Ferner weist bei beiden Ausführungsformen des Wärmetauschers 1, 1' das Kernrohr 2 eine größere Axiallänge als das Abgasrohr 3 auf. Die wesentlichen Unterschiede zwischen dem Wärmetauscher 1 der ersten Ausführungsform und dem Wärmetauscher 1' der zweiten Ausführungsform beziehen sich überwiegend auf unterschiedliche Ausgestaltungen des Strömungsteilers 10 bzw. 10' und des Strömungssammlers 16 bzw. 16', deren charakteristische Merkmale vorstehend beschrieben wurden.

Nachstehend wird das erfindungsgemäße Verfahren zum Betrieb eines Hallenheizungssystems erläutert. Bei dem Verfahren wird von zumindest einem der Heizvorrichtung 19 zugeordneten Brenner ein Abgasstrom 15 erzeugt. Der Abgasstrom 15 wird durch die Abgasleitung 20 über das dem Wärmetauscher 1 oder 1' zugeordnete Abgasrohr 3 zu der ins Freie führenden Abgasanlage 22 geleitet. Im Wärmetauscher 1 oder 1' wird der Abgasstrom 15 durch den Abgasringspalt 14 hindurch vom zweiten Längsende 8 zu dem ersten Längsende 5 des Wärmetauschers 1, 1' gefördert wird. Im Wärmetauscher 1, 1' erfolgt die Wärmeübertragung der im Abgasstrom 15 enthaltenen Wärme auf den ersten und zweiten Kühlfluidstrom 11 und 12, wobei der Abgasstrom 15 entgegen der Strömungsrichtung der Kühlfluidströme 11, 12 strömt. Bedeutsam für das erfindungsgemäße Verfahren ist, dass die Wärmeübertragung in radial entgegengesetzte Richtungen erfolgt, d.h. die Wärme des Abgases wird sowohl radial nach innen an den im Kernrohr 2 strömenden Kühlfluidstrom 11 als auch radial nach außen an den im Ringspalt 13 strömenden Kühlfluidstrom 12 abgegeben. Bei der in radial entgegengesetzter Richtungen erfolgender Wärmeübertragung wird die Temperatur des Abgasstromes 15 innerhalb des Wärmetauschers 1, 1' und bis zum ersten Längsende 5 des Wärmetauchers 1, 1' bzw. bis zum austrittsseitigen Ende des Abgasrohres 3 auf mindestens 70°C abgekühlt oder bis in seinen Kondensationsbereich abgesenkt. Bei der Wärmeübertragung wird ferner der erste Kühlfluidstrom 11 und der zweite Kühlfluidstrom 12 oder nur einer der beiden Kühlfluidströme 11, 12 innerhalb des Wärmetauschers 1, 1' auf wenigstens 30°C erwärmt.

Dementsprechend kann der erste Kühlfluidstrom 12, der bei seiner Durchströmung des Kernrohres 2 erwärmt wird, oder der zweite Kühlfluidstrom 12, der bei seiner Durchströmung des Ringspalts 13 erwärmt wird, dem Brenner der Heizvorrichtung 19 als vorerwärmte Verbrennungsluft zugeführt werden. Selbstverständlich kann auch nur einer der beiden erwärmten Kühlfluidströme 11, 12 dem Brenner als vorerwärmte Verbrennungsluft zugeführt werden. Denkbar ist es auch, dass beide oder einer der beiden erwärmten Kühlfluidströme 11, 12 zur Beheizung des Hallenraumes, in dem sich der Wärmetauscher befindet, oder für einen Torschleier verwendet werden.

Insgesamt zeichnet sich die Erfindung durch einen dreischaligen und nur aus Aluminium gebildeten Abgaswärmetauscher 1, 1' aus, bei dem die Wärmeübertragung im Gegenstromprinzip erfolgt. Das von einem Brenner zu dem Abgaswärmetaucher 1, 1' geleitete Abgas wird bis zur Kondensation im Abgasringspalt 14 abgekühlt. Die primäre Abkühlung des Abgasstromes 15 erfolgt über das innere Kernrohr 2, wobei der zweite Kühlfluidstrom 12 im äußeren Ringspalt 13 verhindert, dass Wärme an die äußere Umgebung abgegeben wird. Der erste Kühlfluidstrom 11, der durch das Kernrohr 2 strömt, wird beim Wärmeaustausch auf 30-38°C erwärmt und beispielsweise dem zu beheizenden Raum über einen Ventilator zugeführt. Ferner kann der erste Kühlfluidstrom 11 mit dem zweiten Kühlfluidstrom 12 im äußeren Ringspalt 15 kombiniert werden. Alternativ oder zusätzlich kann der zweite Kühlfluidstrom 12 des äußeren Ringspaltes 13 zur Verbrennungslufttemperaturanhebung genutzt werden. Die erwärmte Luft der beiden oder nur von einem der beiden Kühlfluidströme 11, 12 kann u.a. für Nebenräume, Mezzaninen, Torschleier oder verfahrenstechnische Anwendungen genutzt werden. Aufgrund der Verwendung von Aluminium als Material für die Bauteile des Wärmetauschers 1, 1' wird der optimale Wärmeübergang gewährleistet, wohingegen die Wandstärke von 1,5 mm die Langlebigkeit des Wärmetauschers 1, 1' sicherstellt. Die strömungsgünstige, glatte, mit geringsten Wiederständen behaftete Konstruktion des Wärmetauschers 1, 1' benötigt nur geringste Zusatzenergie zur Erreichung der Kondensation. Mit Hilfe der Erfindung sind Wirkungsgrade bis zu 108% möglich. Dabei ist die Kombination zweier oder mehrerer Geräte bzw. Heizvorrichtungen mit Brennern an einem Wärmetauscher 1, 1' möglich. Bestehende Heizungssysteme sind mit dem erfindungsgemäßen Wärmetauscher 1, 1' herstellerunabhängig nachrüstbar. Der Wärmetauscher 1, 1' ist in allen direkt befeuerten Heizanlagen (Dunkelstrahler, Vakuumanlagen im Unterdruckbetrieb und Überdruckanlagen, Warmlufterzeuger) einsetzbar, wobei eine Kondensation sowohl im Volllast- als auch im Teillastbetrieb sichergestellt ist und eine Kondensatabfuhr über Neutralisationsboxen erfolgen kann. Die Absenkung der Temperatur des Abgasstromes 15 auf maximal 70°C lässt die Verwendung von Kunststoffabgassystemen zu. Ferner ist durch den erfindungsgemäßen Wärmetauscher 1, 1' ein Betrieb mit Unterdruck- und Überdruckabgassystemen möglich. Der Wärmetauscher 1, 1' ist modular an sämtliche Systeme durch Änderung der Rohrlängen und/oder der Querschnitte anpassbar.

## Patentansprüche

1. Wärmetauscher (1, 1') eines Hallenheizungssystems, der rohrförmig ausgebildet ist und ein Kernrohr (2), ein das Kernrohr (2) umfangsmäßig umgebendes Abgasrohr (3) und ein das Abgasrohr (3) umfangsmäßig umgebendes Außenrohr (4) umfasst,
wobei ein erstes Längsende (5) des Wärmetauschers (1, 1') eine Zuführung (6) für einen Gesamtkühlfluidstrom (7) aufweist,
wobei es sich bei dem Gesamtkühlfluidstrom (7) um aus der Umgebung stammende Luft handelt,
wobei ein im Bereich des ersten Längsendes (5) des Wärmetauschers (1, 1') angeordneter Strömungsteiler (10, 10') den Gesamtkühlfluidstrom (7) in einen ersten Kühlfluidstrom (11) und in einen zweiten Kühlfluidstrom (12) teilt,
wobei sich das Kernrohr (2) zwischen dem ersten Längsende (5) und einem zweiten Längsende (8) des Wärmetauschers (1, 1') erstreckt und mit dem Strömungsteiler (10, 10'), der das Kernrohr (2) mit dem ersten Kühlfluidstrom (11) versorgt, in Strömungsverbindung steht,
wobei zwischen dem Abgasrohr (3) und dem Kernrohr (2) ein Abgasringspalt (14) gebildet ist, durch den ein im Bereich des zweiten Längsendes (8) des Wärmetauschers (1, 1') zugeführter und im Bereich des ersten Längsendes (5) des Wärmetauschers (1, 1') abgeführter Abgasstrom (15) strömt,
wobei ein zwischen dem Außenrohr (4) und dem Abgasrohr (3) gebildeter Ringspalt (13) mit dem Strömungsteiler (10), der den Ringspalt (13) mit dem zweiten Kühlfluidstrom (12) versorgt, in Strömungsverbindung steht, und
wobei der Wärmeaustausch vom Abgasstrom (15) auf die beiden Kühlfluidströme (11, 12) in entgegengesetzte Radialrichtungen erfolgt,
und wobei das zweite Längsende (8) des Wärmetauschers (1, 1') mit einer zumindest einen Teil des Gesamtkühlfluidstroms (7) abführenden Abführleitung (9) verbunden ist und wobei
die von dem ersten Kühlfluidstrom (11) durchströmte Querschnittsfläche des Kernrohres (2) größer ist als die von dem Abgasstrom (15) durchströmte Querschnittsfläche des zwischen dem Kernrohr (2) und dem Abgasrohr (3) gebildeten Abgasringspalts (14).

2. Wärmetauscher (1, 1') nach Anspruch 1, wobei im Bereich des zweiten Längsendes (8) des Wärmetauschers (1, 1') ein Strömungssammler (16, 16') angeordnet ist, der den ersten und zweiten Kühlfluidstrom (11, 12) zusammenführt und als erwärmten Gesamtkühlfluidstrom (7) oder Teilkühlfluidstrom zur Abführleitung (9) leitet.

3. Wärmetauscher (1, 1') nach einem der vorhergehenden Ansprüche, wobei das Kernrohr (2) innerhalb des Wärmetauschers (1, 1') eine größere Längserstreckung aufweist als das Abgasrohr (3).

4. Wärmetauscher (1, 1') nach einem der vorhergehenden Ansprüche, wobei das Außenrohr (4), das Abgasrohr (3) und das Kernrohr (2) einen kreisförmigen Querschnitt aufweisen und im Wesentlichen konzentrisch zueinander angeordnet sind.

5. Wärmetauscher (1, 1') nach einem der vorhergehenden Ansprüche, wobei das Abgasrohr (3) mit seinem ersten Ende (17) in Nähe des zweiten Längsendes (8) des Wärmetauschers (1, 1') und mit seinem zweiten Ende (18) in Nähe des Strömungsteilers (10, 10') radial nach außen über den Außenumfang des Außenrohres (4) geführt ist.

6. Hallenheizungssystem mit wenigstens einem Abgase abgebenden und einer Heizvorrichtung (19) zugeordneten Brenner, der in einem zu heizenden Hallenraum angeordnet ist und an den sich mindestens eine die Abgase abführende Abgasleitung (20) anschließt, die innerhalb des zu heizenden Hallenraumes angeordnet ist und die zu einer ins Freie mündenden Abgasanlage (22) führt,
wobei innerhalb des zu heizenden Hallenraumes wenigstens ein Wärmetauscher (1, 1') nach einem der Ansprüche 1 bis 5 angeordnet ist, der stromab der Abgasleitung (20) und stromauf der Abgasanlage (22) angeordnet ist, wobei das Abgasrohr (3) des Wärmetauschers (1, 1') mit der Abgasleitung (20) und der Abgasanlage (22) in Strömungsverbindung steht,
wobei eine dem Wärmetauscher (1, 1') zugeordnete Fördervorrichtung den Gesamtkühlfluidstrom (7) zu dem ersten Längsende (5) des Wärmetauschers (1, 1') fördert,
wobei das zweite Längsende (8) des Wärmetauschers (1, 1') mit zumindest einem, wenigstens einen Teil des im Wärmetauscher (1, 1') erwärmten Gesamtkühlfluidstroms (7) nutzenden Verbraucher verbunden ist, und
wobei der Wärmeaustausch im Wärmetauscher (1, 1') vom Abgasstrom (15) auf die beiden Kühlfluidströme (11, 12) in entgegengesetzte Radialrichtungen erfolgt.

7. Hallenheizungssystem nach Anspruch 6, wobei der wenigstens eine Brenner Teil eines Dunkelstrahlers (23), eines Hellstrahlers (25, 26), eines Warmlufterzeugers (27) oder eines Vakuum- oder Mehrbrennersystems (27) ist.

8. Hallenheizungssystem nach Anspruch 6 oder 7, wobei stromab des wenigstens einen Wärmetauschers (1, 1') und stromauf der Abgasanlage (22) eine Abführvorrichtung (24) zur Abfuhr des sich in dem Abgasrohr (3) gebildeten Kondensats vorgesehen ist.

9. Hallenheizungssystem nach einem der Ansprüche 6 bis 8, wobei sich an dem zweiten Längsende (8) des Wärmetauschers (1, 1') eine Wärmeübertragungsvorrichtung (29) anschließt.

10. Verfahren zum Betrieb eines Hallenheizungssystems, bei dem von zumindest einem einer Heizvorrichtung (19) zugeordneten Brenner ein Abgasstrom (15) erzeugt wird, der durch eine Abgasleitung (20) über ein zumindest einem Wärmetauscher (1, 1') nach einem der Ansprüche 1 bis 5 zugeordnetes Abgasrohr (3) zu einer ins Freie führenden Abgasanlage (22) geleitet wird,
wobei der Abgasstrom (15) in dem zumindest einen Wärmetauscher (1, 1') durch den Abgasringspalt (14), der zwischen dem Abgasrohr (3) und dem sich im Inneren des Abgasrohres (3) erstreckenden Kernrohr (2) gebildet wird, hindurch gefördert wird,
wobei innerhalb des zumindest einen Wärmetauschers (1, 1') eine in entgegengesetzte Radialrichtungen erfolgende Wärmeübertragung der im Abgasstrom (15) enthaltenen Wärme durchgeführt wird, bei der die Wärme des Abgasstromes (15) sowohl auf den ersten, im Kernrohr (2) geförderten Kühlfluidstrom (11) als auch auf den zweiten Kühlfluidstrom (12) übertragen wird, der durch den Ringspalt (13), der zwischen dem das Abgasrohr (3) umfangsmäßig umgebenen Außenrohr (4) und dem Abgasrohr (3) gebildet wird, hindurch gefördert wird.

11. Verfahren nach Anspruch 10, wobei die Temperatur des Abgasstromes (15) innerhalb des zumindest einen Wärmetauschers (1, 1') bis zum austrittsseitigen Ende des Abgasrohres (3) auf mindestens 70°C abgekühlt oder bis in seinen Kondensationsbereich abgesenkt wird.

12. Verfahren nach Anspruch 10 oder 11, wobei der erste Kühlfluidstrom (11) und/oder der zweite Kühlfluidstrom (12) innerhalb des zumindest einen Wärmetauschers (1, 1') auf wenigstens 30°C erwärmt werden/wird.

13. Verfahren nach einem der Ansprüche 10 bis 12, wobei der erste, im Kernrohr (2) strömende und erwärmte Kühlfluidstrom (11) und/oder der zweite, im Ringspalt (13) zwischen dem Außenrohr (4) und dem Abgasrohr (3) strömende und erwärmte Kühlfluidstrom (12) dem wenigstens einen Brenner als vorerwärmte Verbrennungsluft zugeführt werden/wird.

## Claims

1. A heat exchanger (1, 1') for a hall heating system that is realized in a tubular fashion and comprises a core pipe (2), an exhaust gas pipe (3) that circumferentially surrounds the core pipe (2) and an outer pipe (4) that circumferentially surrounds the exhaust gas pipe (3),
wherein a first longitudinal end (5) of the heat exchanger (1, 1') features a supply (6) for an overall flow of cooling fluid (7),
wherein the overall flow of cooling fluid (7) is air from the environment,
wherein a flow divider (10, 10') arranged in the region of the first longitudinal end (5) of the heat exchanger (1, 1') divides the overall flow of cooling fluid (7) into a first flow of cooling fluid (11) and a second flow of cooling fluid (12),
wherein the core pipe (2) extends between the first longitudinal end (5) and a second longitudinal end (8) of the heat exchanger (1, 1') and is fluidically connected to the flow divider (10, 10') that supplies the core pipe (2) with the first flow of cooling fluid (11),
wherein an annular exhaust gas gap (14) is formed between the exhaust gas pipe (3) and the core pipe (2) and an exhaust gas flow (15) that is supplied in the region of the second longitudinal end (8) of the heat exchanger (1, 1') and discharged in the region of the first longitudinal end (5) of the heat exchanger (1, 1') flows through said annular exhaust gas gap, wherein an annular gap (13) formed between the outer pipe (4) and the exhaust gas pipe (3) is fluidically connected to the flow divider (10) that supplies the annular gap (13) with the second flow of cooling fluid (12), and
wherein the heat exchange from the exhaust gas flow (15) to the two flows of cooling fluid (11, 12) takes place in opposite radial directions,
wherein the second longitudinal end (8) of the heat exchanger (1, 1') is connected to a discharge line (9) that discharges at least part of the overall flow of cooling fluid (7), and
wherein the cross-sectional area of the core pipe (2), through which the first flow of cooling fluid (11) flows, is larger than the cross-sectional area of the annular exhaust gas gap (14) that is formed between the core pipe (2) and the exhaust gas pipe (3) and through which the exhaust gas flow (15) flows.

2. The heat exchanger (1, 1') according to Claim 1, wherein a flow combiner (16, 16') is arranged in the region of the second longitudinal end (8) of the heat exchanger (1, 1'), with said flow combiner combining and conveying the first and the second flow of cooling fluid (11, 12) to the discharge line (9) in the form of a heated overall flow of cooling fluid (7) or partial flow of cooling fluid.

3. The heat exchanger (1, 1') according to one of the preceding claims, wherein the core pipe (2) has a greater longitudinal extent within the heat exchanger (1, 1') than the exhaust gas pipe (3).

4. The heat exchanger (1, 1') according to one of the preceding claims, wherein the outer pipe (4), the exhaust gas pipe (3) and the core pipe (2) have a circular cross section and are essentially arranged concentric to one another.

5. The heat exchanger (1, 1') according to one of the preceding claims, wherein the first end (17) of the exhaust gas pipe (3) extends radially outward over the outer circumference of the outer pipe (4) in the vicinity of the second longitudinal end (8) of the heat exchanger (1, 1') and its second end (18) extends radially outward over the outer circumference of the outer pipe in the vicinity of the flow divider (10, 10').

6. A hall heating system with at least one burner that emits exhaust gases and is assigned to a heating device (19), with said burner being arranged in a hall space to be heated and connected to at least one exhaust gas line (20) for discharging the exhaust gases that is arranged within the hall space to be heated and extends to an exhaust gas system (22) leading outdoors,
wherein at least one heat exchanger (1, 1') according to one of Claims 1 to 5 is arranged within the hall space to be heated and positioned downstream of the exhaust gas line (20) and upstream of the exhaust gas system (22), with the exhaust gas pipe (3) of the heat exchanger (1, 1') being fluidically connected to the exhaust gas line (20) and the exhaust gas system (22),
wherein a conveying device assigned to the heat exchanger (1, 1') conveys the overall flow of cooling fluid (7) to the first longitudinal end (5) of the heat exchanger (1, 1'),
wherein the second longitudinal end (8) of the heat exchanger (1, 1') is connected to at least one consumer that utilizes at least part of the overall flow of cooling fluid (7) heated in the heat exchanger (1, 1'), and
wherein the heat exchange in the heat exchanger (1, 1') from the exhaust gas flow (15) to the two flows of cooling fluid (11, 12) takes place in opposite radial directions.

7. The hall heating system according to Claim 6, wherein the at least one burner forms part of a dark radiator (23), a bright radiator (25, 26), a hot-air generator (27) or a vacuum system or multi-burner system (27).

8. The hall heating system according to Claim 6 or 7, wherein a discharge device (24) for discharging the condensate being formed in the exhaust gas pipe (3) is provided downstream of the at least one heat exchanger (1, 1') and upstream of the exhaust gas system (22).

9. The hall heating system according to one of Claims 6 to 8, wherein a heat transfer device (29) is connected to the second longitudinal end (8) of the heat exchanger (1, 1').

10. A method for operating a hall heating system, in which an exhaust gas flow (15) is generated by at least one burner assigned to a heating device (19), with said exhaust gas flow being conveyed to an exhaust gas system (22) leading outdoors through an exhaust gas line (20) via an exhaust gas pipe (3) that is assigned to at least one heat exchanger (1, 1') according to one of Claims 1 to 5,
wherein the exhaust gas flow (15) is in the at least one heat exchanger (1, 1') conveyed through the annular exhaust gas gap (14) formed between the exhaust gas pipe (3) and the core pipe (2) extending in the interior of the exhaust gas pipe (3), and
wherein a heat transfer of the heat contained in the exhaust gas flow (15) that takes place in opposite radial directions is carried out within the at least one heat exchanger (1, 1'), with the heat of the exhaust gas flow (15) being transferred to the first flow of cooling fluid (11) conveyed in the core pipe (2), as well as to the second flow of cooling fluid (12) conveyed through the annular gap (13) formed between the outer pipe (4) that circumferentially surrounds the exhaust gas pipe (3) and the exhaust gas pipe (3).

11. The method according to Claim 10, wherein the temperature of the exhaust gas flow (15) is reduced to at least 70°C or lowered into its condensation range within the at least one heat exchanger (1, 1') by the time it reaches the end of the exhaust pipe (3) on the outlet side.

12. The method according to Claim 10 or 11, wherein the first flow of cooling fluid (11) and/or the second flow of cooling fluid (12) is/are heated to at least 30°C within the at least one heat exchanger (1, 1').

13. The method according to one of Claims 10 to 12, wherein the first flow of cooling fluid (11) that flows through and is heated in the core pipe (2) and/or the second flow of cooling fluid (12) that flows through and is heated in the annular gap (13) between the outer pipe (4) and the exhaust gas pipe (3) is/are fed to the at least one burner in the form of pre-heated combustion air.

## Revendications

1. Echangeur thermique (1, 1') d'un système de chauffage de grand local, qui est constitué de forme tubulaire et comprend un conduit central (2), un conduit d'évacuation (3) entourant périphériquement le conduit central (2) et un tube extérieur (4) entourant périphériquement le conduit d'évacuation (3)
pour lequel une première extrémité longitudinale (5) de l'échangeur thermique (1, 1') présente une alimentation (6) pour un écoulement de fluide de refroidissement général (7)
pour lequel l'écoulement de fluide de refroidissement général (7) est de l'air provenant de l'environnement
pour lequel un diviseur de débit (10, 10') disposé dans la zone de la première extrémité longitudinale (5) de l'échangeur thermique (1, 1') divise l'écoulement de fluide de refroidissement général (7) en un premier écoulement de fluide de refroidissement (11) et en un deuxième écoulement de fluide de refroidissement (12),
pour lequel le conduit central (2) s'étend entre la première extérmité longitudinale (5) et une deuxième extrémité longitudinale (8) de l'échangeur thermique (1, 1') et est en relation d'écoulement avec le diviseur de débit (10, 10') qui alimente le conduit central (2) avec le premier écoulement de fluide de refroidissement (11),
pour lequel un espace annulaire d'évacuation (14) est constitué entre le conduit d'évacuation (3) et le conduit central (2) à travers lequel passe un écoulement d'évacuation (15) amené dans la zone de la deuxième extrémité longitudinale (8) de l'échangeur thermique (1, 1') et entraîné dans la zone de la première extrémité longitudinale (5) de l'échangeur thermique (1, 1'),
pour lequel un espace annulaire (13) formé entre le tube extérieur (4) et le conduit d'évacuation (3) est en relation d'écoulement avec le diviseur de débit (10), qui alimente l'espace annulaire (13) en écoulement de fluide de refroidissement (12) et
pour lequel l'échange de chaleur a lieu depuis l'écoulement d'évacuation (15) sur les deux écoulements de fluide de refroidisseeent (11, 12) dans des directions radiales opposées
pour lequel la deuxième extrémité longitudinale (8) de l'échangeur thermique (1, 1') est reliée avec une conduite d'évacuation (9) évacuant au moins une partie de l'écoulement du fluide de refroidissement général (7) et pour lequel la surface de section traversée par le premier écoulement de fluide de refroidissement (11) du conduit central (2) est plus grande que la surface de section traversée par l'écoulement d'évacuation de l'espace annulaire d'évacuation (14) formé entre le conduit central (2) et le conduit d'évacuation (3).

2. Echangeur thermique (1, 1') selon la revendication 1 pour lequel un collecteur de débit (16, 16') est disposé dans la zone de la deuxième extrémité longitudinale (8) de l'échangeur thermique (1, 1'), qui réunit le premier et le deuxième écoulement de fluide de refroidissement (11, 12) et conduit à la conduite d'évacuation (9) en tant qu'écoulement de fluide de refroidissement général (7) ou écoulement de fluide de refroidissement partiel.

3. Echangeur thermique (1, 1') selon une quelconque des revendications précédentes pour lequel le conduit central (2) présente à l'intérieur de l'échangeur thermique (1, 1') un allongement longitudinal plus grand que le conduit d'évacuation (3).

4. Echangeur thermique (1, 1') selon une quelconque des revendications précédentes pour lequel le tube extérieur (4), le conduit d'évacuation (3) et le conduit central (2) présentent une section circulaire et sont disposés pour l'essentiel de façon concentrique l'un à l'autre.

5. Echangeur thermique (1, 1') selon une quelconque des revendications précédentes pour lequel le conduit d'évacuation (3) est guidé avec sa première extrémité (17) à proximité de la deuxième extrémité longitudinale (8) de l'échangeur thermique (1, 1') et avec sa deuxième extrémité (18) à proximité du diviseur de débit (10, 10') de façon radiale vers l'extérieur au-dessus de la périphérie extérieure du tube extérieur (4).

6. Système de chauffage de grand local avec au moins un brûleur évacuant les gaz d'échappement et attribué à un dispositif de chauffage (19), qui est disposé dans une espace de local à chauffer et auquel se raccorde au moins une conduite d'évacuation (20) évacuant les gaz d'échappement qui est disposée à l'intérieur de l'espace de local à chauffer et qui conduit à une installation d'évacuation (22) débouchant à l'air libre,
pour lequel à l'intérieur de l'espace de local à chauffer est disposé au moins un échangeur thermique (1, 1') selon une quelconque des revendications 1 à 5, qui est disposé en aval de la conduite d'évacuation (20) et en amont de l'installation d'évacuation (22), pour lequel le
conduit d'évacuation (3) de l'échangeur thermique (1, 1') est en relation d'écoulement avec la conduite d'éacuation (20) et l'installation d'évacuation (22),
pour lequel un dispositif d'alimentation attribué à l'échangeur thermique (1, 1') transporte l'écoulement de fluide de refroidissement général (7) vers la première extrémité longitudinale (5) de l'échangeur thermique (1, 1'),
pour lequel la deuxième extrémité longitudinale (8) de l'échangeur thermique (1, 1') est reliée avec au moins un cosommateur utilisant au moins une partie de l'écoulement de fluide de refroidissement général (7) chauffé dans l'échangeur thermique (1, 1') et
pour lequel l'échange de chaleur dans l'échangeur thermique (1, 1') a lieu dans des directions radiales opposées de l'écoulement d'évacuation (15) vers les deux écoulements de fluide de refroidissement (11, 12).

7. Système de chauffage de grand local selon la revendication 6 pour lequel le au moins un brûleur est une partie d'un radiateur obscur (23), d'un radiateur à lampes incandescentes (25, 26), d'un générateur d'air chaud (27) ou d'un système à vide ou à brûleurs multiples (27).

8. Système de chauffage de grand local selon la revendication 6 ou 7 pour lequel en aval d'au moins un échangeur thermique (1, 1') et en amont de l'installation d'évacuation (22) est prévu un dispositif d'évacuation (24) pour évacuer le condensat qui s'est formé dans le conduit d'évacuation (3).

9. Système de chauffage de grand local selon une quelconque des revendications 6 à 8 pour lequel le un dispositif de transfert de chaleur (29) se raccorde à la deuxième extrémité longitudinale (8) de l'échangeur thermique (1, 1').

10. Procédé pour le fonctionnement un système de chauffage de grand local pour lequel un écoulement d'évacuation (15) est produit par au moins un brûleur attribué à un dispositif de chauffage (19), qui est dirigé par une conduite d'évacuation (20) à travers un conduit d'évacuation (3) attribué au moins à un échangeur thermique (1, 1') selon une quelconque des revendications 1 à 5 vers une installation d'évacuation (22) conduisant à l'air libre,
pour lequel l'écoulement d'évacuation (15) est transporté dans le au mins un échangeur thermique (1, 1') à tarvers l'espace annuaire d'évacuation (14) qui est constitué entre le conduit d'avacuation (3) et le conduit central (2) s'étendant à l'intérieur du conduit d'évacuation (3),
pour lequel à l'intérieur d'au moins un échangeur thermique (1, 1') est effectué un transfert
de chaleur ayant lieu dans des directions radiales opposées de la chaleur contenue dans l'écoulement d'évacuation (15), pour lequel la chaleur de l'écoulement d'évacuation (15) est transférée tant sur le premier écoulement de fluide de refroidissement (11) transporté dans le conduit central (2) qu'également sur le deuxième écoulement de fluide de refroidissement (12), qui est transportée à travers l'espace annulaire (13) qui est formé entre le conduit extérieur (4) entourant périphériquement le conduit d'évacuation (3) et le conduit d'évacuation (3).

11. Procédé selon la revendication 10 pour lequel la température de l'écoulement d'évacuation (15) à l'intérieur d'au moins un échangeur thermique (1, 1') jusqu'à l'extrémité côté sortie du conduit d'évacuation (3) est refroidie au moins à 70° C ou est abaissée jusqu'à sa zone de condensation.

12. Procédé selon al revendication 10 ou 11 pour lequel le premier écoulement de fluide de refroidissement (11) et/ou le deuxième écoulement de fluide de refroidissement (12) à l'intérieur d'au moins un échangeur thermique (1, 1') sont/est chauffé(s) à au moins 30° C.

13. Procédé selon une quelconque des revendications 10 à 12 pour lequel le premier écoulement de fluide de refroidissement (11) passant et chauffé dans le conduit central (2) et/ou le deuxième écoulement de fluide de refroidissement (12) passant et chauffé dans l'espace annulaire (13) entre le conduit extérieur (4) et le conduit d'évacuation (3) sont/est amené(s) vers le au moins un brûleur en tant qu'air de combustion préchauffé.
